# EUROPÄISCHE PATENTSCHRIFT

(11) **EP 1 002 609 B1**
(45) Veröffentlichungstag und Bekanntmachung des Hinweises auf die Patenterteilung: **28.08.2002**
(21) Anmeldenummer: 99121041.0
(22) Anmeldetag: 21.10.1999
(51) Int. Cl.: B23D 31/00

(54) **Vorrichtung zum Bruchtrennen eines drehgesichert gehaltenen Lagerdeckels von einer Lageranordnung eines Bauteils, insbesondere Antriebsstrang-Bauteil für Kfz**
Apparatus for fracturing connecting rods in which the cap can not pivot during fracturing
Dispositif pour casser des bielles en évitant un pivotement de la tête de bielle

(30) Priorität: 19.11.1998 DE 19853307
(43) Veröffentlichungstag der Anmeldung: 24.05.2000
(73) Patentinhaber: Bayerische Motoren Werke Aktiengesellschaft, 80809 München (DE)
(72) Erfinder: Wiesemann, Johann, 80992 München (DE); Luchner, Clemens, 85598 Baldham (DE)

(56) Entgegenhaltungen:
- EP-A- 0 876 869
- WO-A-95/28248
- US-A- 5 115 564

## Beschreibung

Die Erfindung bezieht sich nach dem Oberbegriff des Patentanspruches 1 auf eine Vorrichtung zum Bruchtrennen eines drehgesichert gehaltenen Lagerdeckels von einer Lageranordnung eines Bauteiles, insbesondere Antriebsstrang-Bauteil für Kfz, umfassend eine Haltezange mit an diametralen Abschnitten des Lagerdeckels gesteuert angreifenden Spannelementen, wobei relativ zur Haltezange über diese der Lagerdeckel drehgesichert gehalten ist.

Eine gattungsgemäße Vorrichtung mit einer Haltezange gemäss dem Oberbegriff des Anspruchs 1 ist in der internationalen Anmeldung PCT/WO 95/28248 in Figur 6 dargestellt und beschrieben. Bei dieser in der Vorrichtung ortsfest bzw. unbeweglich angeordneten Haltezange sind deren gesteuert zustellbare sowie verriegelbare Spannelemente gegen die diametralen Stirnflächen des Lagerdeckels zur drehgesicherten Halterung desselben gepreßt. Für die Erzielung einer gewünschten Drehsicherung des bruchzutrennenden Lagerdeckels sind in der vorbeschriebenen Spann-Halterung die Entform-Schrägen der Stirnseiten der gegossenen Lagerdeckel mitberücksichtigt derart, daß über diese Gußschrägen eine zusätzliche Verkeilung des Lagerdeckels zwischen diametralen Spannelementen beim Bruchtrennen erreicht ist.

Das Maß der zusätzlichen Verkeilung unterliegt zum einen den jeweiligen Neigungen der Gußschrägen von diametralen Stirnflächen des Lagerdeckels und zum anderen der jeweiligen Oberflächenqualität der Stirnflächen im Bereich der angelegten Spannelemente, so daß nachteilige Bewegungen des Lagerdeckels während des Bruchtrennens nicht auszuschließen sind.

Der Erfindung liegt die Aufgabe zugrunde, eine gattungsgemäße Vorrichtung mit einer Haltezange auszurüsten, mit der ein Lagerdeckel zum einstufigen Bruchtrennen einwandfrei drehgesichert gehalten ist.

Diese Aufgabe ist mit dem Patentanspruch 1 gelöst, wobei die Haltezange in der Vorrichtung in Bruchtrennrichtung des Lagerdeckels frei beweglich geführt angeordnet ist und mit auf Anlageflächen der Schraubenpfeifen des Lagerdeckels aufsetzbaren Anschlagstempeln ausgerüstet ist, wobei ferner die Spannelemente an schwenkbeweglich gesteuerten und verriegelbaren Zangenarmen angeordnet und derart ausgebildet sind, daß über die mit an diametralen Abschnitten des Lagerdeckels gesondert ausgebildeten Keilflächen zusammenwirkenden Spannelemente und die mit der Haltezange fest verbundenen Anschlagstempel gegen den Lagerdeckel verspannbar angeordnet sind.

Die Erfindung sieht somit eine in Bruchtrenn-Richtung des Lagerdeckels mit diesem beim Bruchtrennen verlagerbare Haltezange vor, gegen deren zur Bruchtrenn-Richtung parallele Anschlagstempel der Lagerdeckel über die mit den Zangenarmen bewirkte Verkeilung an gesondert ausgebildeten Keilflächen des Lagerdeckels dieser relativ in vorteilhafter Weise drehgesichert gehalten ist. Mit den erfindungsgemäß gesondert ausgebildeten, vorzugsweise mechanisch bearbeiteten Keilflächen an einem Lagerdeckel ist eine exakte Verkeilung der Zangenarme mit dem Lagerdeckel in vorteilhafter Weise erreicht, die wiederum eine wirksame Verspannung des Lagerdeckels gegen die Anschlagstempel ermöglicht. Damit bilden Haltezange und gespannt gehaltener Lagerdeckel eine relativ zum Bruchtrenn-Vorgang in sich starre Einheit, die beim Bruchtrennen eines Lagerdeckels aus heterogenem Material trotzdem eine einstufige Bruchtrennung ermöglicht mit dem Vorteil qualitativ hochwertiger Bruchtrennflächen.

Die erfindungsgemäße Haltezange ist in vorteilhafter Weise in unterschiedlichen Vorrichtungen zum Bruchtrennen eines Lagerdeckels verwendbar, wobei deren Einsatz z.B. zum Bruchtrennen eines Lagerdeckels von einer Lageranordnung in einem Maschinengehäuse einer Hubkolbenmaschine, insbesondere Brennkraftmaschine oder zum Bruchtrennen eines Lagerdeckels von einer in einem Insert ausgebildeten Lageranordnung eines Hinterachsgetriebe-Gehäuses in Leichtmetall-Grauguß-Verbundbauweise bevorzugt ist.

Weitere Ausgestaltungen der Erfindung sind in weiteren Unteransprüchen beschrieben.

Die Erfindung ist anhand einer in der Zeichnung teilweise dargestellten Vorrichtung sowie erfindungsgemäß ausgebildeten Lagerdeckeln beschrieben. Es zeigt
- Figur 1: eine in einer Vorrichtung zum Bruchtrennen verwendbare Haltezange zum Bruchtrennen eines Lagerdeckels,
- Figur 2: einen für die in Figur 1 dargestellte Haltezange entsprechend gestalteten Lagerdeckel,
- Figur 3: eine Variante eines Lagerdeckels mit zwischen den Anschlagstempeln quer angeordneten Zangenarmen (nicht dargestellt).

Eine Vorrichtung 1 zum Bruchtrennen eines drehgesichert gehaltenen Lagerdeckels 2 von einer Lageranordnung 3 eines Antriebsstrang-Bauteiles für Kraftfahrzeuge umfaßt eine Haltezange 4 mit an diametralen Abschnitten des Lagerdeckels 2 gesteuert angreifenden Spannelementen 5 und 5'.

Zur sicheren Erzielung eines einstufigen Bruchtrenn-Vorganges ohne jegliche Drehbewegung während der Bruchtrennung bei einseitiger Bruchauslösung wird erfindungsgemäß vorgeschlagen, daß die Haltezange 4 in der Vorrichtung 1 in Bruchtrennrichtung gemäß Pfeil "A" des Lagerdeckels 2 frei beweglich geführt angeordnet ist und mit auf Anlageflächen 6 der Schraubenpfeifen 7 des Lagerdeckels 2 aufsetzbaren Anschlagstempeln 8 ausgerüstet ist. Diese Anschlagstempel 8 sind wesentliches Teil zur Erzielung einer in sich starren Verbindung von Lagerdeckel 2 und Haltezange 4 dadurch, daß die Spannelemente 5, 5' an schwenkbeweglich gesteuerten und verriegelbaren Zangenarmen 9, 9' angeordnet und derart ausgebildet sind, daß über die mit an diametralen Abschnitten des Lagerdeckels 2 gesondert ausgebildeten Keilflächen 10, 10' zusammenwirkenden Spannelemente 5, 5' und die mit der Haltezange 4 fest verbundenen Anschlagstempel 8 gegen den Lagerdeckel verspannbar angeordnet sind.

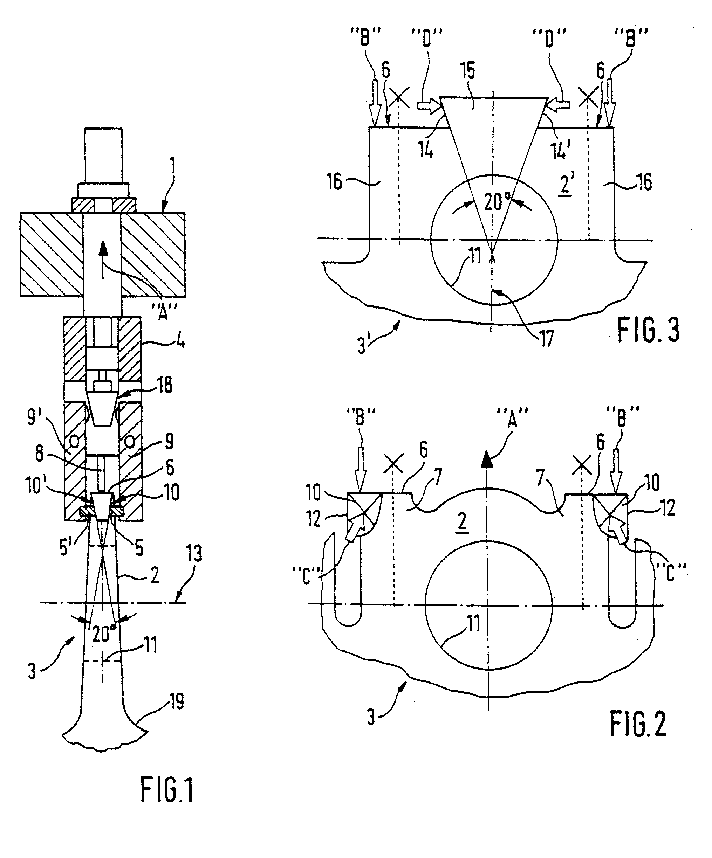

Wie aus Figur 2 näher ersichtlich, symbolisieren die Pfeile "B" die auf die Anlageflächen 6 der Schraubenpfeifen 7 des Lagerdeckels 2 aufsetzbaren Anschlagstempeln 8, wobei die durch die Pfeile "C" symbolisierten Spannelemente 5, 5' an den Zangenarmen 9, 9' der Haltezange 4 mit Keilflächen 10, 10' an seitlichen Fortsätzen 12 der Schraubenpfeifen 7 des Lagerdeckels 2 zusammenwirken und die mechanisch bearbeiteten Keilflächen 10, 10' einen mit der Spitze zur Bruchtrennfläche 13 des Lagerdeckels 2 gerichteten Keil von 15° bis 25°, vorzugsweise 20° bzw. jeweils eine Neigung von 10° einschließen.

Die in Figur 1 gezeigte Haltezange 4 ist zur drehgesicherten Halterung des in Figur 2 gezeigten Lagerdeckels 2 verwendet, wobei der Lagerdeckel 2 von einer Lageranordnung 3 in einem Maschinengehäuse 19 einer nicht näher dargestellten Hubkolbenmaschine, insbesondere Brennkraftmaschine, bruchgetrennt ist.

Eine im Aufbau vorteilhaft einfache Haltezange 4 ist schließlich dadurch erreicht, daß die an der Haltezange 4 schwenkbeweglich gelagerten Zangenarme 9, 9' mittels nicht aufgezeigter Federkraft in Spreizposition zur Annäherung an den Lagerdeckel 2 gesteuert und mittels eines gesteuert betätigten Klemmkeiles 18 in Klemmposition an den Keilflächen 10, 10' des Lagerdeckels 2 gebracht sind.

Figur 3 zeigt einen abgewandelten Lagerdeckel 2' einer in einem Insert ausgebildeten Lageranordnung 3' eines Hinterachsgetriebe-Gehäuses (nicht gezeigt) in Leichtmetall-Grauguß-Verbundbauweise, wobei die durch die Pfeile "D" symbolisierten Spannelemente an den Zangenarmen der nicht gezeigten Haltezange mit Keilflächen 14, 14' eines schwalbenschwanzartigen Fortsatzes 15 am Lagerdeckel 2' zwischen seinen Schraubenpfeifen zusammenwirken, und die Keilflächen 14, 14' einen mit der Spitze auf einer in Bruchtrenn-Richtung weisenden Symetrieachse 17 der Lageranordnung 3' liegenden Keil von 15° bis 25° vorzugsweise 20° bzw. jeweils 10° Neigung einschließen. Mit den am Lagerdeckel 2' angreifenden Pfeilen "B" sind wiederum nicht gezeigte Anschlagstempel 8 symbolisiert, wobei aus der Figur 3 des Lagerdeckels 2' zu schließen ist, daß die nicht gezeigten Zangenarme zwischen den Anschlagstempeln an den Keilflächen 14 und 14' des Fortsatzes 15 zum Angriff kommen.

## Patentansprüche

1. Vorrichtung zum Bruchtrennen eines drehgesichert gehaltenen Lagerdeckels von einer Lageranordnung eines Bauteiles, insbesondere Antriebsstrang-Bauteil für Kfz,
- umfassend eine Haltezange (4) mit an diametralen Abschnitten des Lagerdeckels (2, 2') gesteuert angreifenden Spannelementen (5, 5'),
- wobei relativ zur Haltezange (4) über diese der Lagerdeckel (2, 2') gehalten ist,
**dadurch gekennzeichnet,**
- **daß** die Haltezange (4) in der Vorrichtung (1) in Bruchtrenn-Richtung (Pfeil "A") des Lagerdeckels (2, 2') frei beweglich geführt angeordnet ist und
- mit auf Anlageflächen (6) der Schraubenpfeifen (7) des Lagerdeckels (2, 2') aufsetzbaren Anschlagstempeln (8) ausgerüstet ist, wobei ferner
- die Spannelemente (5, 5') an schwenkbeweglich gesteuerten und verriegelbaren Zangenarmen (9, 9') angeordnet und derart ausgebildet sind, daß
- über die mit an diametralen Abschnitten des Lagerdeckels (2, 2') gesondert ausgebildeten Keilflächen (10, 10'; 14, 14') zusammenwirkenden Spannelemente (5, 5') und die mit der Haltezange (4) fest verbundenen Anschlagstempel (8) gegen den Lagerdeckel (2, 2') verspannbar angeordnet sind.

2. Vorrichtung nach Anspruch 1, **dadurch gekennzeichnet,**
- **dass** die Spannelemente (5, 5') an den Zangenarmen (9, 9') der Haltezange (4) mit an seitlichen Fortsätzen (12) der Schraubenpfeiffen des Lagerdeckels (2) vorgesehenen Keilflächen (10, 10') korrespondierende Keilflächen aufweisen, die
- einen mit der Spitze zur Bruchtrennfläche (13) des Lagerdeckels (2) gerichteten Keil von 15° bis 25°, vorzugsweise 20°, einschließen (Fig. 2).

3. Vorrichtung nach Anspruch 1, **dadurch gekennzeichnet,**
- **dass** die Spannelemente (5,5') an den Zangenarmen (9, 9') der Haltezange (4) mit an einem schwalbenschwanzartigen Fortsatz (15) zwischen Schraubenpfeiffen (16) am Lagerdeckel (2') angeordneten Keilflächen (14, 14') korrespondierende Keilflächen aufweisen, die
- einen mit der Spitze auf einer in Bruchtrenn-Richtung weisenden SymmetrieAchse (17) der Lageranordnung (3') liegenden Keil von 15° bis 25°, vorzugsweise 20° einschließen (Fig. 3).

4. Vorrichtung nach einem der Ansprüche 1 bis 3, **dadurch gekennzeichnet,**
- **daß** die an der Haltezange (4) schwenkbeweglich gelagerten Zangenarme (9, 9') mittels Federkraft in Spreizposition gesteuert und
- mittels eines gesteuert betätigten Klemmkeiles (18) in Klemmposition am jeweiligen Lagerdeckel (2, 2') gebracht sind.

5. Verwendung einer Vorrichtung nach den Ansprüchen 1, 2 und 4 zum Bruchtrennen eines Lagerdeckels (2) von einer Lageranordnung (3) in einem Maschinengehäuse (19) einer Hubkolbenmaschine, insbesondere Brennkraftmaschine (Fig. 2).

6. Verwendung einer Vorrichtung nach den Ansprüchen 1, 3 und 4 zum Bruchtrennen eines Lagerdeckels (2') von einer in einem Insert ausgebildeten Lageranordnung (3') eines Hinterachsgetriebe-Gehäuses in Leichtmetall-Grauguss-Verbundweise (Fig. 3).

## Claims

1. A device for breaking a non-rotatably secured bearing cover away from a bearing arrangement for a component, especially a component of the line of drive for a motor vehicle,
- comprising retaining tongs (4) with clamping elements (5, 5') which in controlled manner engage diametral portions of the bearing cover (2, 2'),
- wherein the bearing cover (2, 2') is held by the clamping elements relative to the retaining tongs (4),
**characterised in that**
- the tongs (4) in the device (1) are guided so as to be freely movable in the direction (arrow "A") for breaking away the bearing cover (2, 2'), and
- are equipped with rams (8) for mounting on abutment surfaces (6) of the screw holes (7) in the bearing cover (2, 2'), wherein
- the clamping elements (5, 5') are disposed on pivotably controlled, lockable tongs arms (9, 9') and are constructed so that
- they can be clamped against the bearing cover (2, 2') by the rams (8) firmly connected to the tongs (4) and by the clamping elements (5, 5') co-operating with wedge surfaces (10, 10'; 14, 14') formed separately on diametral portions of the bearing cover (2, 2').

2. A device according to claim 1, **characterised in that**
- the clamping elements (5, 5') on the arms (9, 9') of the tongs (4) have wedge surfaces corresponding to wedge surfaces (10, 10') provided on lateral projections (12) from the screw holes in the bearing cover (2), and
- enclosing a wedge of 15° to 25°, preferably 20°, with its tip directed towards the surface (13) for breaking apart the bearing cover (2) (Figure. 2).

3. A device according to claim 1, **characterised in that**
- the clamping elements (5, 5') on the arms (9, 9') of the tongs (4) have wedge surfaces corresponding to wedge surfaces (14, 14') disposed on a dovetail projection (15) between the screw holes (16) on the bearing cover (2'), and
- enclose a wedge of 15° to 25°, preferably 20°, with its tip lying on an axis of symmetry (17) of the bearing arrangement (3') pointing in the direction for breaking apart (Figure. 3).

4. A device according to any of claims 1 to 3, **characterised in that**
- the arms (9, 9') pivotably mounted on the tongs (4) are actuated by spring force in the spread-open position and
- are brought by a controlled, actuated clamping wedge (18) into the clamped position against the respective bearing cover (2, 2').

5. Use of a device according to claims 1, 2 and 4 for breaking a bearing cover (2) away from a bearing arrangement (3) in a casing (19) of a reciprocating engine, especially an internal combustion engine (Figure. 2).

6. Use of a device according to claims 1, 3 and 4 for breaking a bearing cover (2') away from a bearing arrangement (3'), formed in an insert, of a differential drive casing made of composite light metal and cast iron (Figure. 3).

## Revendications

1. Dispositif de séparation par rupture d'un chapeau de palier tenu bloqué en rotation, et faisant partie d'un dispositif de palier d'une pièce, notamment d'une pièce de ligne de transmission d'un véhicule automobile,
- comprenant une pince de fixation (4) avec un des éléments de serrage (5, 5') agissant de manière commandée contre les segments diamétraux du chapeau de palier (2, 2'),
- le chapeau de palier (2, 2') étant tenu par ses éléments par rapport à la pince de fixation (4),
**caractérisé en ce que**
- la pince de fixation (4) est montée de manière guidée libre en mouvement dans le dispositif (1) de séparation par rupture (flèche A) du chapeau de palier (2, 2') et
- elle est équipée de poinçons de butée (8) s'appliquant sur les surfaces d'appui (6) des pinces à vis (7) du chapeau de palier (2, 2') et en outre
- les éléments de serrage (5, 5') sont montés sur des bras de pince (9, 9') commandés de manière mobile en pivotement et verrouillables et réalisés de façon que
- les éléments de serrage (5, 5') qui coopèrent avec des surfaces en forme de coin (10, 10', 14, 14') réalisés séparément sur des segments diamétraux du chapeau de palier (2, 2') et les poinçons de butée (8) reliés solidairement à la pince de fixation (4) permettent le montage serré contre les chapeaux de palier (2, 2').

2. Dispositif selon la revendication 1,
**caractérisé en ce que**
- les éléments de serrage (5, 5') présentent des surfaces en forme de coin sur les bras de pince (9, 9') de la pince de fixation (4), ces surfaces correspondant aux surfaces en forme de coin (10, 10') prévues sur les prolongements latéraux (12) des pipes de vissage du chapeau de palier (2),
- ces surfaces forment un coin d'un angle de 15° à 25°, de préférence de 20°, avec la pointe tournée vers la surface de séparation par rupture (13) du chapeau de palier (2) (figure 2).

3. Dispositif selon la revendication 1,
**caractérisé en ce que**
- les éléments de serrage (5, 5') des bras de pince (9, 9') de la pince de fixation (4) ont des surfaces en forme de coin correspondant aux surfaces en forme de coin (14, 14') prévues sur un prolongement (15) en forme de queue d'aronde entre les pipes de vissage (16) du chapeau de palier (2'),
- ces surfaces en forme de coin délimitent un coin ayant un angle compris entre 15° et 25°, de préférence égal à 20°, dirigé suivant l'axe de symétrie (17) du dispositif de palier (3') dans la direction de séparation par rupture (figure 3).

4. Dispositif selon l'une des revendications 1 à 3,
**caractérisé en ce que**
- les bras de pince (9, 9') montés de manière mobile en pivotement sur la pince de fixation (4) sont commandés en position d'écartement par une force de ressort, et
- sont mis en position de serrage contre le chapeau de palier respectif (2, 2') par un coin de serrage (18) actionné de manière commandée.

5. Application d'un dispositif selon les revendications 1, 2, 4, pour la séparation par rupture d'un chapeau de palier (2) d'un dispositif de palier (3) dans un bloc moteur (19) d'un moteur à piston linéaire, notamment d'un moteur à combustion interne (figure 2).

6. Application d'un dispositif selon les revendications 1, 3, 4 pour la séparation par rupture d'un chapeau de palier (2') d'un dispositif de palier (3') en forme d'insert d'un carter de transmission d'essieu arrière en construction composite de fonte grise- métal léger (figure 3).
